Europäisches Patentamt

European Patent Office

Office européen des brevets

(11) Publication number: **0 242 929**
A2

# (12) EUROPEAN PATENT APPLICATION

(21) Application number: 87200751.3

(22) Date of filing: 21.04.87

(51) Int. Cl.³: **A 21 C 7/00**

(30) Priority: **18.04.86 NL 8600995**

(43) Date of publication of application:
**28.10.87 Bulletin 87/44**

(84) Designated Contracting States:
**AT BE CH DE ES FR GB GR IT LI LU NL SE**

(71) Applicant: **Rijkaart, Lodewijk Cornelis**
**Kijftenbeltlaan 29**
**NL-3871 BC Hoevelaken(NL)**

(72) Inventor: **Rijkaart, Lodewijk Cornelis**
**Kijftenbeltlaan 29**
**NL-3871 BC Hoevelaken(NL)**

(74) Representative: **Hoorweg, Petrus Nicolaas et al,**
**OCTROOIBUREAU ARNOLD & SIEDSMA Sweelinckplein**
**1**
**NL-2517 GK The Hague(NL)**

(54) A device to prepare a dough balls for bakery products.

(57) A device to prepare a dough ball for bakery products (D),
said device consisting substantially of a disc-shaped base
(11) provided with a bearing surface (16) for supporting a
portion of dough to be formed into a ball, and a counter
member (18) arranged on the bearing surface (16), in which
at least the base (11) can be brought into an oscillating
motion by means of a drive, the bearing surface (16) being
placed in a position which deviates from the horizontal and
the countermember (18) being a curved wall which makes
close contact with at least the bottom boundary of the
bearing surface, with which dough balls of arbitrary size can
be made and the capacity of which device is easily expand-
able by the use of more acutely sloping surfaces or of
specially shaped curved walls.

FIG. 1

Hw/Mv/2 Rijkaart
EU 87200751.3 /18-5-1987

A device to prepare a dough ball for bakery products

This invention relates to a device to prepare a dough ball for bakery products, said device consisting substantially of a base provided with a bearing surface for supporting a portion of dough to be formed into a ball, and a counter member arranged on the bearing surface, in which at least the base can be brought into an oscillating motion by means of a drive.

Devices of the kind are known in numerous embodiments, their capacity being such that large quantities of dough must be processed in order to permit the device to operate at an economic level. A device of the kind is thus serviceable only in a production process which involves relatively large quantities of dough.

The invention has for its aim to provide a device in which the quantity of dough can be arbitrarily determined, and can even be limited to a single ball.

The device is therefore suitable for relatively small bakeries, and can be deployed flexibly in the production process.

The device according to the invention is distinguished in that the bearing surface is placed in a position which deviates from the horizontal and in that the counter-element is a curved wall which makes close contact with at least the bottom boundary of the bearing surface.

Owing to the use of the sloping bearing surface and the curved wall which makes contact therewith, successive dough balls of arbitrary size can be made. The capacity of the device is easily expandible through the use of more acutely sloping surfaces or of specially shaped curved walls. As a consequence of the production capacity being extremely flexible, the device can easily be deployed in bakeries of any given capacity.

The use of the sloping bearing surface has moreover proved advantageous in obtaining a dough ball having the required surface tension.

This last property is still further promoted through the drive being provided, in a preferred embodiment, with an eccentric which engages the base and a guideway at a distance from said eccentric. The motions of various points on the bearing surface are consequently different in character, and are a resultant of a rotational and a translational motion.

Furthermore, the counter-element can be made bowl shaped, it being thereby advantageous to arrange the bowl on a frame which can be hinged around its horizontal axis. By this means, the bowl can be swung up from the bearing surface or base so that the completed dough ball can slide down the bearing surface and can be removed. In this way, the device can be automated with respect to forming time.

In order to improve the adhesion of the dough mass to the bearing surface during forming, the bearing surface is provided with one or more irregularities, preferably in the form of one or more spiral grooves.

The invention will be further explained in the detailed description, below, of an embodiment.

In the drawing:

Figure 1 shows a vertical cross-section of the device according to the invention,

Figure 2 shows a perspective view of the device of figure 1,

Figure 3 shows a top view of the bearing surface of the base used in figures 1 and 2,

Figures 4 and 5 show, respectively, a top view and a cross-section of an alternative embodiment of the base.

Numeral 1 indicates a casing-like chassis of the device. The front of casing-like chassis 1 is made with a sloping front surface 2 in which an opening 3 is cut. In case 1 is mounted, in a manner not further shown, a drive mechanism 4, which consists of a motor 5 driving, through a worm-gear transmission 6, a rotational shaft 7 which is arranged perpendicular to front wall 2. The rotation shaft is journalled in a ball-bearing 8, which is mounted in a bracket 9 extending between the upright side walls of case 1. This is merely for illustration and the journalling of shaft 7 can take place in any arbitrary manner.

The end of shaft 7 distal from bearing 8 is made with an eccentric 15.

Parallel to and outside front wall 2, a base 11 is arranged, made with a bush 12 on its underside. In this bush 12 is mounted a bearing 13 which fits around eccentric disc 10.

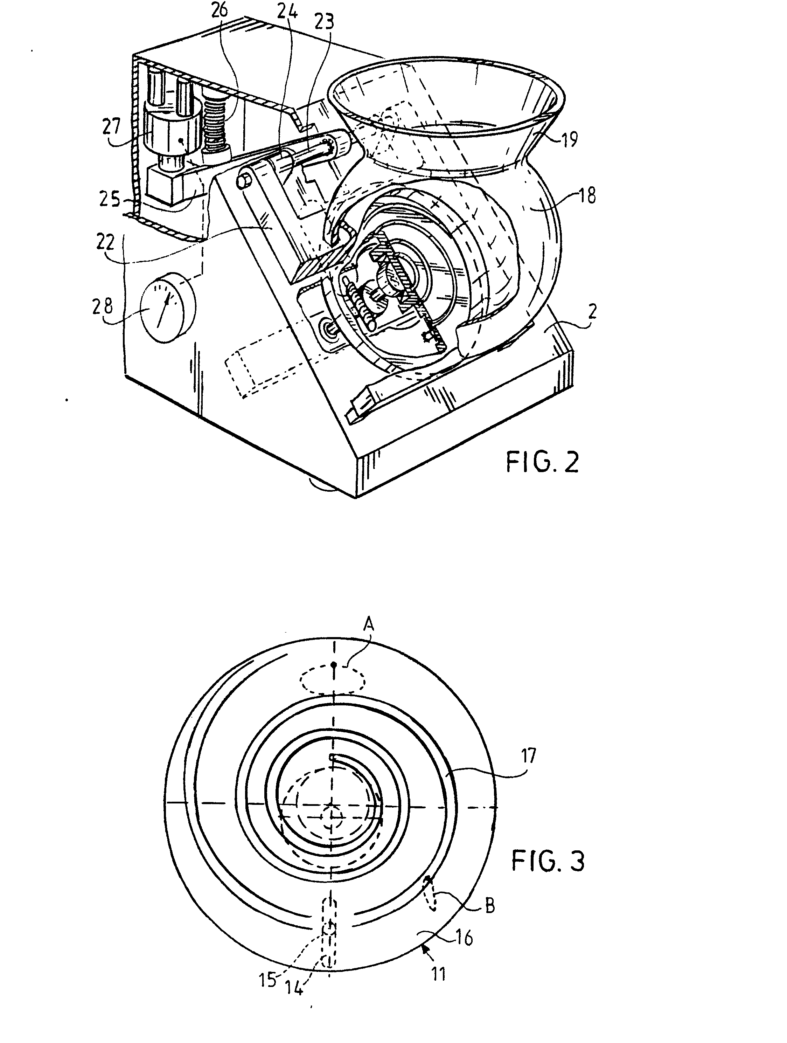

The base 11 has a disc-like shape (see also figure 3) and is made on the side of bush 12 with a radially oriented groove 14. Into this groove 14 projects a pin 15, which is mounted on fixed front wall 2.

Base 11 displays a front surface 16 which is the non-horizontal bearing surface according the invention. This bearing surface is made with irregularities, as shown in figure 3, preferably in the form of spiral grooves 17.

Around the circumference of, and at least along the lower side of, this bearing surface, contact is made with a curved wall 18, which is a part of a whole bowl-shaped component, of which the top is made as a supply funnel 19.

The counter-member in the form of a bowl 18 shown in the drawing is, on the side opposite supply funnel 19, which side makes contact with base 11, supported on a frame 20. This frame 20 has a circular opening 21 along the edge of which the wall of bowl 18 is adjoined. Frame 20 is provided with two upward-pointing arms 22 each of which is provided with a hole, in such manner that a hinge pin or axle 23 can be fastened through the holes of arms 22. This hinge axle 23 is journalled in bearing brackets 24 arranged on front wall 2 of case 1, in such manner that frame 20 can be hinged upwards around axis 23.

Between bearing brackets 24, hinge axle 23 is provided with a thereto firmly affixed lever arm 25. Between lever arm 25 and the top wall of case 1, a compression spring 26 is arranged. The end of lever arm 25 which is distal from hinge axis 23 is of such material that it can be attracted by solenoid coil 27, arranged above it and fixed firmly to the top wall of case 1. Solenoid coil 27 can be powered in a not further indicated but known manner. The powering of the solenoid can be interrupted by means of a so-called time switch 28, such that the solenoid core loses its magnetic attractive force upon interruption of the electric tension.

The above-described device works as follows:

The baker, after weighing off a certain portion of dough D, can drop this piece of dough through funnel 19 into the bowl 18. On switching on of drive motor 5, base 16 will undergo a motion which is indicated in figure 3 by broken lines A or B. It is apparent from this that every point on surface 16 of base 11 describes a different trajectory, said trajectory being the resultant of the eccentric rotary motion in the centre of disc 11 and the rectilinear translation motion in the neighbourhood of groove 14.

Owing to this motion, the piece of dough D is turned around in bowl 18 and formed into a ball. This effect is promoted by the spiral grooves 17.

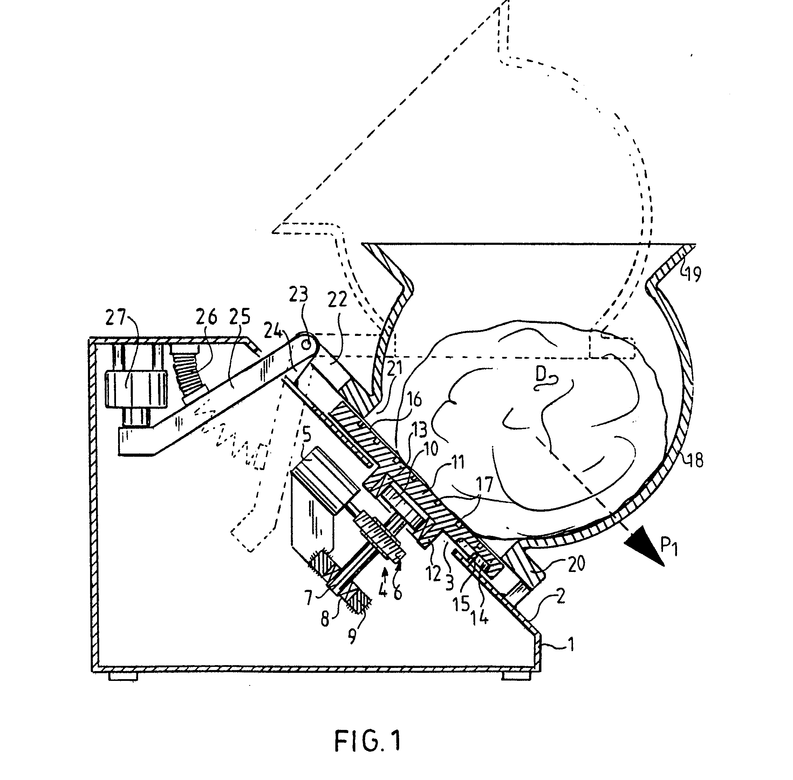

Depending on the quantity and character of the dough, the baker has previously set time switch 28 which, after elapse of time, interrupts the powering of coil 27, with the consequence that the attractive force acting on lever 25 disappears. As soon as this happens, spring 26 will turn lever arm 25, and thus also frame 20, in an anti-clockwise direction. This carries bowl 18 upwards into the position indicated by a broken line in figure 1. Through this, the ball-shaped piece of dough will of its own accord fall under the influence of gravity in the direction of arrow P1 onto a collecting surface (not shown).

The device is then ready for the following dough-forming operation, for which the baker turns bowl 18 back into its original position, can power up the solenoid and can place a new piece of dough in the bowl.

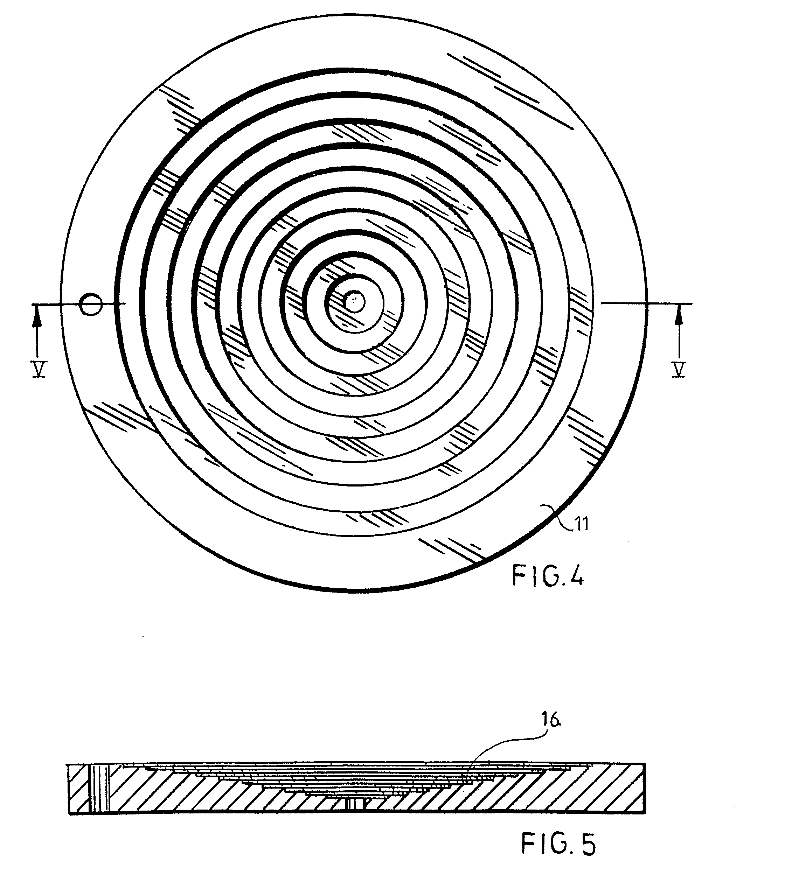

Figures 4 and 5 show an alternative embodiment of the base, in which the upper surface of the base is hollowed into a dish shape, the bearing surface thus formed being deepened in a stepped fashion towards the centre, whereby a favourable action is obtained on the dough to be shaped.

The invention is not limited to the above-described embodiment. Thus, for example, it is possible to give base 11 a non-circular form, such as an elongated ellipse of which the principal axis extends in a horizontal direction, the counter-element displaying a curved wall with a plurality of adjacent bowl-shaped parts 18. By this means the capacity of the device can be simply expanded.

**CLAIMS**

1. A device to prepare a dough ball for bakery products, said device consisting substantially of a base provided with a bearing surface for supporting a portion of dough to be formed into a ball, and a counter-member arranged on the bearing surface, in which at least the base can be brought into an oscillating motion by means of a drive, **characterized** in that the bearing surface is placed in a position deviating from the horizontal, and that the counter-element is a curved wall which makes close contact with at least the lower boundary of the bearing surface.

2. A device as claimed in claim 1, **characterized** in that the transmission is provided with an eccentric engaging the base and, situated at a distance therefrom, a guideway.

3. A device as claimed in claim 1 or 2, **characterized** in that the counter-element is bowl-shaped and is arranged on a frame which can be pivoted around a horizontal axis.

4. A device as claimed in claim 3, **characterized** in that the horizontal axis is arranged higher than the base.

5. A device as claimed in claims 3 and 4, characterized in that the frame is provided with a time controlled holding device, for instance a magnetic coil.

6. A device as claimed in one of the foregoing claims, **characterized** in that the bearing surface of the base is provided with one or more irregularities.

7. A device as claimed in claim 6, **characterized** in that the irregularity is a spiral groove.

8. A device as claimed in claim 6, **characterized** in that the base is hollowed into a dish shape.

FIG.1

0242929

FIG. 2

FIG. 3

0242929

FIG.4

FIG.5